# EUROPEAN PATENT APPLICATION

(11) **EP 3 533 366 A1**
(43) Date of publication of application: **04.09.2019**
(21) Application number: 16916396.1
(22) Date of filing: 04.11.2016
(51) Int. Cl.: A47J 45/07

(54) **DETACHABLE PAN HANDLE**

(30) Priority: 30.09.2016 CN 201610890197
(71) Applicant: Zhejiang Keland Electric Appliance Co., Ltd, Jinhua, Zhejiang 321200 (CN)
(72) Inventor: LIU, Bin, Jinhua Zhejiang 321200 (CN); WANG, Qiang, Zhejiang 321200 (CN)
(74) Representative: Zaboliene, Reda
(86) International application number: PCT/CN2016/104672
(87) International publication number: WO 2018/058742

(57) **Abstract**

A removable pan handle including handle body and plug; the said plug is fixed on pan body; the said pan handle further includes removable components that include lock button, latch, opening button and fixed frame; the front side of handle body is provided with a plug accommodating cavity for insertion of plug and a slot used for installing fixed frame; the said slot is located above the said plug accommodating cavity; the front side of the said slot is connected to the rear of the said plug accommodating cavity; the said lock button is arranged above the said plug; and the said latch and opening button are arranged behind the said lock button. The present invention provides a removable pan handle that is easy to use and remove.

## Description

### FIELD OF INVENTION

The present invention relates to a removable pan handle.

### BACKGROUND OF INVENTION

Pan handle in prior art is normally fixedly connected with pan body, so it's inconvenient to store the pan. Some pans are designed with removable handles, but the removal is complicated.

### CONTENT OF INVENTION

To overcome the shortage of existing pan handles, the present invention provides a removable pan handle that is easy to use and remove.

The technical solution employed by the present invention to solve its technical problems:
A removable pan handle including handle body and plug; the said plug is fixed on pan body; the said pan handle further includes removable components that include lock button, latch, opening button and fixed frame; the front side of the said handle body is provided with a plug accommodating cavity for insertion of plug and a slot used for installing fixed frame; the said slot is located above the said plug accommodating cavity; the front side of the said slot is connected to the rear of the said plug accommodating cavity; the said lock button is arranged above the said plug; and the said latch and opening button are arranged behind the said lock button;
The front side of the said fixed frame is furnished with lock button mounting opening for installing lock button; and the rear of the said fixed frame is designed with opening button mounting opening for installing the opening button;
The said lock button includes lock button body, locking torsion spring and pin shaft; the said lock button body is in the said lock button mounting opening; an eccentric protrusion is arranged at lower part of the front side of lock button body; the front side of the said lock button body can be rotatably mounted at the front side of fixed frame through the said pin shaft; the said pin shaft is placed in the said locking torsion spring, of which one end is connected to the middle of the said lock button body, while the other end is connected to the bottom of the said slot;
The rear of the said latch is fixedly connected with the front side of latch return spring, of which the rear is connected in a fixed manner to the inner side wall of slot; and a bayonet is arranged in the middle of the said latch;
The said opening button includes opening button body and opening button return spring; the said latch is mounted at the bottom of slot below the said opening button body; the said opening button body can be mounted in the said bayonet in a vertically moving manner by passing through the opening button mounting opening from top down; the lower end of the said opening button return spring is fixed to the bottom of the said slot; the upper end of the said opening button return spring is connected with the bottom of opening button body; the front-rear width of upper part of the said opening button body is greater than that of the lower part; the front-rear width of the said bayonet is greater than that of the upper part of the said opening button body; and the rear side face at upper part of the opening button body is in contact with the rear side face of inner wall of the said bayonet;
A limit boss is arranged on the lower side of the rear end of the said lock button body; the said limit boss is clamped to the bottom at front end of the said latch when the lock button is in locked state; the said plug protrudes into the said plug accommodating cavity; the rear of the said plug is designed with slot, where the said eccentric protrusion is clamped in the said slot.

Further, the said plug is fixed onto pan by iron screws.

The beneficial effects of the present invention principally include: easy to use; removable; and easy to remove.

### DESCRIPTION OF DRAWINGS

Fig. 1 shows the structure of the removable pan handle.
Fig. 2 is the exploded view of Fig. 1.
Fig. 3 shows the locking mechanism of lock button.
Fig. 4 shows the opening mechanism of lock button.

### SPECIFIC EMBODIMENTS

The present invention will be further described below with reference to the accompanying drawings.

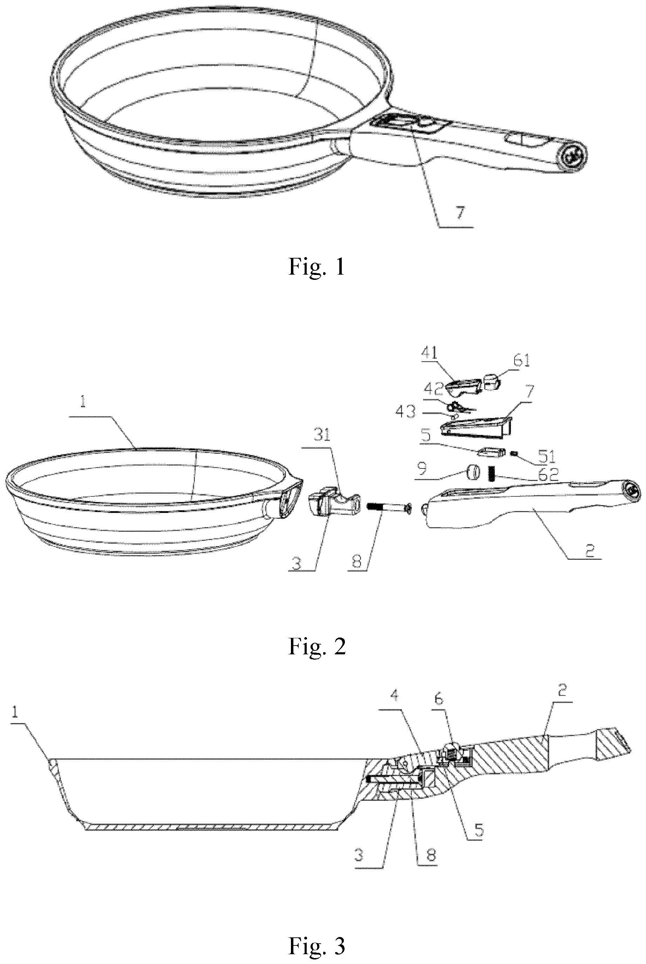

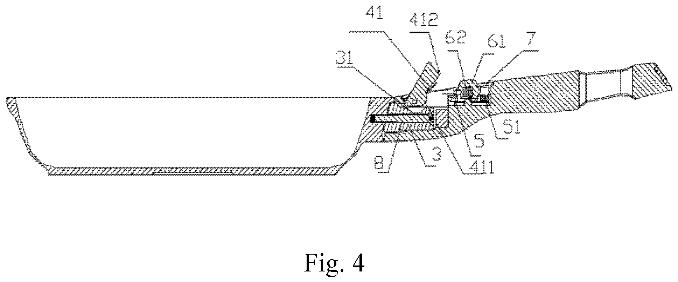

Figs. 1 through 4 show a removable pan handle including handle body 2 and plug 3; the said plug 3 is fixed on pan body 1; the said pan handle further includes removable components that include lock button 4, latch 5, opening button 6 and fixed frame 7; the front side of handle body 2 is provided with a plug accommodating cavity for insertion of plug 3 and a slot used for installing fixed frame; the said slot is located above the said plug accommodating cavity; the front side of the said slot is connected to the rear of the said plug accommodating cavity; the said lock button 4 is arranged above the said plug 3; and the said latch 5 and opening button 6 are arranged behind the said lock button 4;

The front side of the said fixed frame 7 is furnished with lock button 4 mounting opening for installing lock button; and the rear of the said fixed frame 7 is designed with opening button mounting opening for installing the opening button 6;

The said lock button 4 includes lock button body 41, locking torsion spring 42 and pin shaft 43; the said lock button body 41 is in the said lock button mounting opening; an eccentric protrusion 411 is arranged at lower part of the front side of lock button body 41; the front side of the said lock button body 41 can be rotatably mounted at the front side of fixed frame 7 through the said pin shaft 43; the said pin shaft 43 is placed in the said locking torsion spring 42, of which one end is connected to the middle of the said lock button body 41, while the other end is connected to the bottom of the said slot;

The rear of the said latch 5 is fixedly connected with the front side of latch return spring 51, of which the rear is connected in a fixed manner to the inner side wall of slot; and a bayonet is arranged in the middle of the said latch 5;

The said opening button 6 includes opening button body 61 and opening button return spring 62; the said latch 5 is mounted at the bottom of slot below the said opening button body 61; the said opening button body 61 can be mounted in the said bayonet by passing through the opening button mounting opening from top down; the lower end of the said opening button return spring is fixed to the bottom of the said slot; the upper end of the said opening button return spring 62 is connected with the bottom of opening button body 61; the front-rear width of upper part of the said opening button body 61 is greater than that of the lower part; the front-rear width of the said bayonet is greater than that of the upper part of the said opening button body 61; and the rear side face at upper part of the opening button body 61 is in contact with the rear side face of inner wall of the said bayonet;

A limit boss 412 is arranged on the lower side of the rear end of the said lock button body 41; the said limit boss 412 is clamped to the bottom at front end of the said latch when the lock button is in locked state; the said plug 3 protrudes into the said plug accommodating cavity; the rear of the said plug 3 is designed with slot, where the said eccentric protrusion 411 is clamped in the said slot 31.

Further, the rear side face of inner wall of the said bayonet is a pressing slope that is inclined forwardly and downwardly, while the rear side face of the said opening button body 61 is the first inclined face sliding along with the pressing slope.

Still further, the front end face of the said latch 5 is a locking slope that is inclined forwardly and downwardly, while the bottom face of the said limit boss is the second inclined face sliding along with the said locking slope.

The said plug 3 is fixed onto pan by iron screw 8.

In this embodiment, the said fixed frame 7 is mounted in the said slot, while the said handle body 2 contains magnet 9 that attracts iron screw 8 to facilitate the installation.

Operating procedure of the present invention: For installation, insert plug 3 into the plug accommodating cavity, and press down the rear end of lock button body 41 so that the limit boss 412 on lock button body 41 slides forwardly and downwardly along the locking slope of latch 5; in the meantime, the latch return spring 51 is compressed; when the limit boss 412 slides down to the bottom of latch 5, the returning effect of latch return spring 51 clamps limit boss 412 onto the latch bottom face at the side of locking slope; at this point, the eccentric protrusion 411 of lock button body 4 is clamped on slot 31 of plug 3, thereby finishing the installation of pan handle. For disassembly, press down opening button body 61, when the first inclined face on opening button body slides forwardly and downwardly along the pressing slope of the bayonet of latch 5, as a result of which latch 5 moves backwards as a whole, thereby compressing the opening button return spring 62; in the meantime, limit boss 412 on lock button body gets disengaged from latch 5 and is automatically opened by locking torsion spring 42, as a result of which the eccentric protrusion 411 on lock button moves out of slot 31 on plug 3; then, the pan body 1 is separated from the handle body 2 to finish the disassembly.

## Claims

1. A removable pan handle including handle body and plug, where the said plug is fixed on pan body; it is **characterized by** the fact that the said pan handle further includes removable components that include lock button, latch, opening button and fixed frame; the front side of handle body is provided with a plug accommodating cavity for insertion of plug and a slot used for installing fixed frame; the said slot is located above the said plug accommodating cavity; the front side of the said slot is connected to the rear of the said plug accommodating cavity; the said lock button is arranged above the said plug; and the said latch and opening button are arranged behind the said lock button;
the front side of the said fixed frame is furnished with lock button mounting opening for installing lock button; and the rear of the said fixed frame is designed with opening button mounting opening for installing the opening button;
the said lock button includes lock button body, locking torsion spring and pin shaft; the said lock button body is in the said lock button mounting opening; an eccentric protrusion is arranged at lower part of the front side of lock button body; the front side of the said lock button body can be rotatably mounted at the front side of fixed frame through the said pin shaft; the said pin shaft is placed in the said locking torsion spring, of which one end is connected to the middle of the said lock button body, while the other end is connected to the bottom of the said slot;
the rear of the said latch is fixedly connected with the front side of latch return spring, of which the rear is connected in a fixed manner to the inner side wall of slot; and a bayonet is arranged in the middle of the said latch;
the said opening button includes opening button body and opening button return spring; the said latch is mounted at the bottom of slot below the said opening button body; the said opening button body can be mounted in the said bayonet in a vertically moving manner by passing through the opening button mounting opening from top down; the lower end of the said opening button return spring is fixed to the bottom of the said slot; the upper end of the said opening button return spring is connected with the bottom of opening button body; the front-rear width of upper part of the said opening button body is greater than that of the lower part; the front-rear width of the said bayonet is greater than that of the upper part of the said opening button body; and the rear side face at upper part of the opening button body is in contact with the rear side face of inner wall of the said bayonet;
a limit boss is arranged on the lower side of the rear end of the said lock button body; the said limit boss is clamped to the bottom at front end of the said latch when the lock button is in locked state; the said plug protrudes into the said plug accommodating cavity; and the rear of the said plug is designed with slot, where the said eccentric protrusion is clamped in the said slot.

2. The removable pan handle as described in Claim 1, which is **characterized by** the fact that the rear side face of inner wall of the said bayonet is a pressing slope that is inclined forwardly and downwardly, while the rear side face of the said opening button body is the first inclined face sliding along with the pressing slope.

3. The removable pan handle as described in Claim 1 or 2, which is **characterized by** the fact that the front end face of the said latch 5 is a locking slope that is inclined forwardly and downwardly, while the bottom face of the said limit boss is the second inclined face sliding along with the said locking slope.

4. The removable pan handle as described in Claim 1 or 2, which is **characterized by** the fact that the said plug is secured to pan body by iron screw.
